# EUROPÄISCHE PATENTANMELDUNG

(11) **EP 3 159 593 A1**
(43) Veröffentlichungstag der Anmeldung: **26.04.2017**
(21) Anmeldenummer: 15003036.9
(22) Anmeldetag: 23.10.2015
(51) Int. Cl.: F16L 29/00, F16K 3/26

(54) **ROHRVERBINDUNGSSTÜCK UND ROHRSYSTEM**

(71) Anmelder: Karlstedt, Dieter, 56479 Westernohe (DE)
(72) Erfinder: Karlstedt, Dieter, 56479 Westernohe (DE)
(74) Vertreter: Bittner, Bernhard

(57) **Zusammenfassung**

Die Erfindung betrifft ein Rohrverbindungsstück (1) für von einem Fluid (30) durchflossene Rohre (20) mit wenigstens zwei Adaptern (2) zum Anschluss jeweils eines Rohres (20), mit einem Durchleitungskanal (6) mit mindestens zwei Öffnungen (3) zur Durchleitung des Fluides (30). Ferner betrifft die Erfindung ein Rohrsystem (100) zur Durchflussregelung eines Fluides (30).

## Beschreibung

Die Erfindung betrifft ein Rohrverbindungsstück für von einem Fluid durchflossene Rohre mit wenigstens zwei Adaptern zum Anschluss jeweils eines Rohres, mit einem Durchleitungskanal mit mindestens zwei Öffnungen zur Durchleitung des Fluides. Ferner betrifft die Erfindung ein Rohrsystem zur Durchflussregelung eines Fluides.

Zur Heizung und Kühlung einer Umgebung werden meist geschlossene und in Heiz- oder Kühlschleifen verzweigte Rohrsysteme eingesetzt, die von einem Fluid durchflossen werden. Rohrsysteme bestehen oft aus Rohren, die mit Rohrverbindungsstücken verbunden sind. Über die Rohre des Rohsystems nimmt das Fluid Wärme aus einer Umgebung auf, um die Umgebung zu kühlen, oder gibt Wärme an eine Umgebung ab, um sie zu heizen. Um ein für Menschen angenehmes Raumklima in einer im Wesentlichen abgeschlossenen Umgebung, beispielsweise einem Raum, einer Fahrgastzelle oder einem Zugwaggon, zu schaffen, muss das Rohrsystem Wärme aus der Umgebung abschnittsweise so aufnehmen oder Wärme an die Umgebung so abgeben, dass eine möglichst gleichmäßige Temperaturverteilung in der Umgebung herrscht. Eine möglichst homogene Temperaturverteilung in einer Umgebung vermeidet insbesondere Konvektionen in der Umgebungsluft, die von Menschen als unangenehmer und kühler Luftzug empfunden werden. Je geringer die Konvektion in einer Umgebung ist, desto wärmer empfinden Menschen die gefühlte Raumtemperatur bei gleicher tatsächlicher Raumtemperatur. Zur abschnittsweisen Regelung der Temperaturaufnahme oder Temperaturabgabe durch das Fluid aus der Umgebung wird der Durchfluss des Fluides durch Ventile oder Thermostate, insbesondere Heizungsthermostatventile, die in das Rohrsystem integriert sind, abschnittsweise geregelt.

Auch in chemischen Produktionsanlagen müssen Fluidströme aus Gasen oder Flüssigkeiten effizient in Rohrsystemen verteilt werden. Ebenso benötigen Schüttgüter, die in Rohrsystemen verteilt werden sollen, eine Einrichtung zur effizienten Verteilung und Steuerung ihres Stroms.

Ein Ventil ist ein Bauteil zur Absperrung oder Regelung des Durchflusses von Fluiden (Flüssigkeiten oder Gasen). In aus dem Stand der Technik bekannten Ventilen wird ein Verschlussteil (z. B. ein Kegel oder eine Kugel) nahezu parallel zur Strömungsrichtung des Fluides bewegt. Die Strömung wird reduziert oder unterbrochen, indem das gesamte Verschlussteil an eine passend geformte Öffnung angepresst wird. Ventile können als Durchlaufventile ausgestaltet sein, in denen die Eingangsströmungsrichtung der Ausgangsströmungsrichtung entspricht und der Strömungsquerschnitt in manchen Ausführungsformen nicht reduziert wird, oder als Eckventile, in denen die Eingangsströmungsrichtung und die Ausgangsströmungsrichtung unter einem Winkel bestehen, der kleiner ist als 180°.

Ventile können so gefertigt werden, dass diese im Gegensatz zu anderen Absperrorganen (z. B. Absperrschiebern, Absperrklappen, Kugelhähnen) über den gesamten Stellbereich ein im Strömungsquerschnitt gleichmäßiges Strömungsbild erzeugen. Deshalb eignen sich Ventile neben dem reinen Absperren von Stoffströmen auch gut für Regelaufgaben.

Ein Thermostatventil ist ein mechanischer Temperaturregler, der abhängig von der Umgebungstemperatur über ein Ventil einen niedrigeren oder höheren Durchfluss gewährt, um eine Temperatur konstant zu halten.

Aus dem Stand der Technik sind beispielsweise Heizungsthermostatventile bekannt, die den Vorlauf an Heizkörpern zur Raumheizung steuern. Aus dem Stand der Technik bekannte Thermostatventile regeln die Temperatur beispielsweise in Kühlkreisläufen und Kältemaschinen. Beispiele für Thermostatventile sind selbstregelnde Mischbatterien an Dusche oder Badewanne sowie Backofenthermostate an Gasherden.

Nachteilig an den aus dem Stand der Technik bekannten Ventilen und Thermostaten ist, dass sie zumeist selbst in einer maximalen Durchflussposition den Strömungsquerschnitt des Rohsystems verringern, im Vergleich zu den Rohren des Rohrsystems eine relativ große Baugröße haben, die Konfiguration eines Rohrsystems dadurch begrenzen, dass sie zur Ansteuerung und/oder Bedienung begehbar sein müssen. Zudem kommt es selbst in einer maximalen Durchflussposition zu Turbulenzen im Fluidstrom, die als störend empfundene Geräusche produzieren.

Eine Aufgabe der vorliegenden Erfindung ist es daher, ein kostengünstiges, einfach und platzsparend aufgebautes Rohrverbindungsstück zu schaffen, das leicht und flexibel in ein Rohrsystem integrierbar ist, sodass der Fluidstrom durch das Rohrsystem zuverlässig, effizient und störungsarm einstellbar ist.

Diese Aufgabe wird durch ein Rohrverbindungsstück nach Anspruch 1 gelöst.

Eine weitere Aufgabe der Erfindung ist es, ein Rohrsystem zur abschnittsweisen Durchflussregelung eines Fluides zu schaffen, welches flexibel und modular aufbaubar, einfach und leicht montierbar und flexibel, platzsparend und störungsarm in eine beliebige Umgebung integrierbar ist.

Diese Aufgabe wird durch ein Rohrsystem nach Anspruch 13 gelöst.

Weitere vorteilhafte Ausgestaltungen der Erfindung sind Gegenstand der Unteransprüche.

Das erfindungsgemäße Rohrverbindungsstück für von einem Fluid durchflossene Rohre verfügt über mindestens zwei Adapter zum Anschluss jeweils eines Rohres. Das Fluid kann beispielsweise gasförmig oder flüssig vorliegen. Die Erfindung ist jedoch auch auf rieselfähige Schüttgüter anwendbar. Ein Adapter kann beispielsweise als Anschluss für ein Eingangsrohr für Fluide und ein zweiter Adapter als Anschluss für ein Ausgangsrohr für Fluide vorgesehen sein. Das Rohrverbindungsstück weist zumindest einen Durchleitungskanal mit mindestens zwei Öffnungen zur Durchleitung des Fluides auf. Eine Öffnung kann als Eintrittsöffnung für Fluide in den Durchleitungskanal und eine zweite Öffnung als Austrittsöffnung für Fluide aus dem Durchleitungskanal vorgesehen sein. Aus wenigstens einer Öffnung ragt eine herausragende Struktur heraus. In Richtung des Fluidstroms steht die herausragende Struktur über den die Öffnung umgebenden Adapter über. Wird ein Rohr über diesen Adapter des Rohrverbindungsstückes verbunden, so ragt die herausragende Struktur in einen Abschnitt des Rohres hinein und kann in diesem Abschnitt eine offene Querschnittsfläche des Rohres begrenzen. Durch diese Begrenzung des offenen Querschnittes im Abschnitt des Rohrs ist der Fluidstrom bzw. der Durchfluss an Fluiden durch das Rohr teilweise oder vollkommen begrenzbar. Insbesondere kann die Form der herausragenden Struktur derart an die Form des Abschnitts des verbundenen Rohrs angepasst werden, dass sich die offene Querschnittsfläche im Abschnitt des Rohrs abhängig von einer Position der herausragenden Struktur relativ zum Rohr begrenzen oder vergrößern lässt. Über einen Einstellmechanismus des Rohrverbindungsstückes ist die Position der wenigstens einen herausragenden Struktur einstellbar. Somit kann über den Einstellmechanismus der Fluidstrom durch das Rohrverbindungsstück eingestellt werden.

Das erfindungsgemäße Rohrverbindungsstück ist also an sich kein Ventil oder Thermostat, kann aber in Verbindung mit einem Rohr als Ein- oder Mehrwegeventil und/oder Thermostat wirken und ausgestaltet werden. Vorteilhaft dabei ist die kompakte und platzsparende Bauform, mit der das Rohrverbindungsstück die Funktionalität eines Ventils in einem Rohrsystem gewährleisten kann, indem es mit einem Abschnitt eines Rohres zusammenwirkt. Prinzipiell kann der Durchmesser eines beispielsweise rund ausgebildeten Rohrverbindungsstückes dem Durchmesser eines für ein Rohrsystem typischen Rohres entsprechen oder ihn sogar unterschreiten.

Die herausragende Struktur ist vorteilhafterweise im Wesentlichen löffelförmig beziehungsweise schaufelförmig. Im Wesentlichen löffelförmig im Erfindungssinn ist beispielsweise eine Struktur, an der ein geöffneter Hohlraum ausgebildet ist und die ansonsten einen fluiddichten Abschnitt zur teilweisen oder vollständigen Blockade eines Fluidstroms in einem mit dem Rohrverbindungsstück verbundenen Rohr aufweist. Der Hohlraum hat den Vorteil, dass in einer Durchflussposition des Rohrverbindungsstückes relativ zum Rohr, in welches die herausragende Struktur hineinragt, die offene Querschnittsfläche im Rohr nicht oder nur wenig begrenzt wird, sodass der maximale Fluidstrom durch das Rohrsystem aufgrund des Rohrverbindungsstückes im Wesentlichen nicht durch lokale Querschnittsverengungen begrenzt wird. Bevorzugt ist die herausragende Struktur so an den Innenraum des Rohres angepasst, dass zumindest Teilbereiche seiner Außenfläche bündig mit einer Innenfläche des Rohres sind. Dadurch entsteht zwischen der Außenfläche des Rohrverbindungsstückes und der Innenfläche des Rohrs ein Zwischenraum, der in Richtung der Flächennormalen der Außenfläche so dünn ausgeschaltet werden kann, dass wenig oder kein Fluid in ihn eindringen kann. Trotzdem kann eine Relativbewegung zwischen der herausragenden Struktur und dem Rohr möglich sein. Dies hat den Effekt, dass das Fluid im Wesentlichen nur entlang der Innenfläche der herausragenden Struktur und des Rohres strömt. Die Form der herausragenden Struktur kann so an die Innenfläche des mit dem Rohrverbindungsstück verbundenen Rohrs angepasst sein, dass sie in zumindest einer Schließposition fluiddicht zusammenwirken.

Ein Korpus und die wenigstens eine herausragende Struktur des Rohrverbindungsstückes können einstückig, beispielsweise stoffschlüssig, ausgebildet sein. Alternativ kann eine herausragende Struktur ein separates Bauteil sein, welches mit dem Korpus vorzugsweise lösbar verbindbar ist. Die Verbindung kann beispielsweise eine Klemmverbindung, Steckverbindung, Schraubverbindung oder Klebeverbindung sein.

Vorteilhafterweise kann die Verbindung durch Führungsflächen im Rohrverbindungsstück und/oder in der herausragenden Struktur geführt werden. So können beispielsweise an einer, zwei, drei, vier, sechs, acht oder zwölf um die Öffnung des Rohrverbindungsstückes gleichwinkelverteilten vordefinierten Positionen vorgesehen sein. Die Führungsflächen erleichtern auch einem ungeschulten Benutzer den passgenauen Einbau einer herausragenden Struktur in einen Korpus in einer definierten Position. Bevorzugt ist die Verbindung zwischen dem Korpus und dem herausragenden Teil des Rohrverbindungsstückes fluiddicht ausgebildet. Durch diesen modularen Aufbau können aus wenigen Standardbauteilen unterschiedlich konfigurierte Rohrverbindungsstücke zusammengestellt werden. Der passgenaue Einbau ist vor allem aus Sicherheitsgründen wichtig, damit beispielsweise kein Wasser aus einem Heizkreislauf in das beheizte Gebäude oder keine Chemikalien aus einer chemischen Produktionsanlage austreten. Durch Konfigurieren mehrerer herausragender Strukturen an einem Rohrverbindungsstück und/oder durch Anordnung mehrerer Rohrverbindungsstücke können beispielsweise auch Mehrwegeventile aufgebaut werden.

Die wenigstens eine herausragende Struktur kann starr mit dem Korpus des Rohrverbindungsstückes verbunden sein. Alternativ kann die herausragende Struktur um eine Drehachse drehbar im Korpus gelagert sein.

Eine erfindungsgemäße herausragende Struktur kann eine Anzahl von Substrukturen aufweisen. Diese Substrukturen dienen der Strömungsoptimierung des Fluidstroms. Turbulenzen im Fluidstrom verringern den effektiven Fluidstrom durch das Rohr oder das Rohrverbindungsstück. Zudem können sie zu unerwünschten und störenden Geräuschentwicklungen führen. Daher wirken die Substrukturen vorzugsweise Turbulenz reduzierend und laminarisierend auf den Fluidstrom. Beispielsweise können die Substrukturen als Rillen oder Stege bevorzugt entlang des Rohrverlaufes und Nettofluidstromes auf einer Innenseite der herausragenden Struktur ausgebildet sein. Besonders an einer von Fluid überströmten Kante der herausragenden Struktur können sich Turbulenzen bilden. Um die Strömung pro Längeneinheit der Kante zu reduzieren, kann die Kante mit einer strukturierten Kontur ausgebildet werden. Denkbar ist beispielsweise eine zackenförmige oder eine wellenförmige Kontur. In einer besonders geräuscharmen Ausgestaltung können an der Kante der herausragenden Struktur vorzugsweise flexible Borsten, die im Wesentlichen in Strömungsrichtung ausgerichtet sind, angeordnet sein. Dadurch verteilt sich die Strömung über mehr Fläche und der Strömungsabriss wird reduziert.

Die wenigstens eine herausragende Struktur und der Einstellmechanismus können derart eingerichtet sein, dass in einer ersten Position der Durchfluss durch das Rohrverbindungsstück im Wesentlichen unbegrenzt ist, und dass in einer Schließposition der Durchfluss durch das Rohrverbindungsstück im Wesentlichen oder ganz unterbrochen ist. Bevorzugt kann in einer Anzahl von Zwischenpositionen der Durchfluss durch das Rohrverbindungsstück beispielsweise sukzessiv verringert werden. Beispielsweise können die Zwischenpositionen durch das Verdrehen des Rohrs und des Rohrverbindungsstücks gegeneinander in einem Drehwinkelbereich realisiert werden. Durch Ausformung der herausragenden Struktur und seiner Anpassung an das Rohr kann der Zusammenhang zwischen Drehwinkeländerung und eingestelltem Fluidstrom beispielsweise linear sein. Denkbar ist auch, Drehwinkelunterbereiche zu definieren, in denen zur erleichterten Feineinstellung 1° Drehwinkeländerung einer geringeren Änderung im Fluidstrom als in den sonstigen Bereichen des Drehwinkelbereiches liegt.

Die herausragende Struktur kann im Korpus des Rohrverbindungsstückes drehbar und/oder verschieblich gelagert sein. Ferner kann das Rohrverbindungsstück einen oder mehrere Kopplungsmechanismen aufweisen, über die der Einstellmechanismus des Rohrverbindungsstückes betätigbar ist. In einer besonderen Ausführungsform ist der Kopplungsmechanismus ein elektromagnetischer Mechanismus. Beispielsweise können an der im Korpus des Rohrverbindungsstückes beweglich angeordneten herausragenden Struktur Permanentmagnete angeordnet sein, die durch einen am Korpus angeordneten Elektromagneten bewegt werden können. Eine solche elektromagnetisch ausgeführte Bewegungseinrichtung hat den Vorteil, dass keine mechanischen Durchbrechungen durch den Korpus notwendig sind, welche gegen Austritt von Fluid aus dem Rohrsystem abgedichtet werden müssten. Zusätzlich kann eine Arretiervorrichtung einer Position der herausragenden Struktur im Korpus des Rohrverbindungsstückes vorgesehen sein. Dies hat den Vorteil, dass eine durch über die Fläche der herausragenden Strukturen asymmetrischen Überströmung von Fluid bewirkte Kraft auf die herausragende Struktur nicht zu einer Verdrehung, Verschiebung oder Verscherung der herausragenden Struktur im Korpus oder im Rohr und damit zu einer ungewünschten Veränderung des eingestellten Fluidstroms führt. Vorzugsweise ist auch diese Arretiervorrichtung elektrisch oder elektromagnetisch. Denkbare Ausgestaltungen umfassen einen magnetischen Schalter, beispielsweise einen elektromagnetisch antragbaren Stift, der in eine Anzahl von korrespondierenden Nuten, die den einzustellenden Positionen entsprechen, eingeführt werden kann, um die Position der herausragenden Struktur im Korpus des Rohrverbindungsstückes zu fixieren. Der Stift kann im Korpus des Rohrverbindungsstückes und die Nuten an der herausragenden Struktur angeordnet sein. Denkbar ist auch, dass die Arretiervorrichtung auf kraftschlüssiger Arretierung beispielsweise durch Verklemmung beruht. Dadurch ist eine Arretierung in stufenlosen Positionen möglich.

Die wenigstens zwei Adapter des Rohrverbindungsstückes weisen vorteilhafterweise Dichtungsvorrichtungen zur Verhinderung des Austritts von Fluid aus einer Verbindungsfläche zwischen dem Rohrverbindungsstück und einem Rohr in einen Außenbereich auf. Die Dichtwirkung kann auf in Verbindungsrichtung von Rohrverbindungsstück und Rohr beruhender kraftschlüssiger Verbindung beruhen. Zudem können Dichtmittel, wie zum Beispiel Dichtungsringe, vorgesehen sein. Insbesondere kann eine erfindungsgemäße Dichtungsvorrichtung die Dichtwirkung gegen Austritt von Fluid bewirken und gleichzeitig die Verdrehbarkeit des Rohrverbindungsstückes gegen ein mit ihm verbundenes Rohr gewährleisten.

Ein erfindungsgemäßes Rohrverbindungsstück kann zudem mit wenigstens einem Sensor ausgestattet sein. Ein solcher Sensor kann beispielsweise zur Messung der Temperatur des Fluides ausgelegt sein. Denkbar ist ein durch den Korpus des Rohrverbindungsstückes geführter Temperatursensor, der vorzugsweise den Durchleitungskanal des Rohrverbindungsstückes nicht verengt und so zu ungewünschten Turbulenzen im Fluid führt. Denkbar ist auch die Messung der Temperatur an einer definierten Außenstelle des Rohrverbindungsstückes, deren Temperatur mit der Temperatur des Fluides in einer bekannten Weise korreliert. Wird zusätzlich ein weiterer Temperatursensor zur Messung einer Temperatur einer zu temperierenden Umgebung vorgesehen, kann das Rohrverbindungsstück in Zusammenwirkung mit einem Rohr als Thermostat ausgelegt werden. Ein solcher Sensor kann auch als Sensor zur Messung des Durchflusses und/oder des Drucks des Fluides ausgelegt sein. Beispielsweise kann der Sensor ein akustischer Sensor sein, der ein akustisches Signal des Fluidstroms durch den Durchleitungskanal durch Abgleich mit einer Datenbank durch eine Regelungseinrichtung mit seinem Durchfluss korreliert. Zur besseren und standardmäßigen Definition eines solchen akustischen Signals kann eine akustische Struktur im Durchleitungskanal oder an der herausragenden Struktur vorgesehen sein, die vorzugsweise so ausgelegt ist, dass das von der fluidüberströmten akustischen Struktur erzeugte akustische Signal nicht im für Menschen hörbaren Frequenzbereich liegt und eine geringe Impedanz für den Fluidstrom aufweist.

Der wenigstens eine Sensor hat bevorzugt eine Schnittstelle, über die er in Regelverbindung mit einem Antriebsmittel für die wenigstens eine herausragende Struktur und/oder eine Regelungseinrichtung gebracht werden kann. Die Schnittstelle erlaubt beispielsweise die kommunikative Verbindung zur Übermittlung von Messsignalen des wenigstens einen Sensors und von Steuersignalen für das Antriebsmittel. Die Schnittstelle kann zur kabelgebundenen oder drahtlosen Kommunikation ausgelegt sein. Dadurch kann ein Rohrsystem aus Rohren und erfindungsgemäßen Rohrverbindungsstücken auch ohne herkömmliche Ventile zur Einstellung des Durchflusses und/oder des Drucksfluides und so insbesondere für den hydraulischen Abgleich im Rohrsystem verwendet werden. Durch entsprechende Programmierung der Regelungseinrichtung ist der Durchfluss, die Wärmeverteilung und oder der hydraulische Abgleich im Rohrsystem auch automatisierbar.

Ferner betrifft die Erfindung ein Rohrsystem zur Durchflussregelung eines Fluides. Es umfasst wenigstens ein erfindungsgemäßes Rohrverbindungsstück. An diesem Rohrverbindungsstück ist eine Mehrzahl von Rohren verbunden. Rohrverbindungsstücke mit drei, vier, fünf oder mehr Adaptern zum Anschluss von Rohren können als Mehrwegeventile ausgelegt sein. Zumindest ein Ohr ist an einer Verbindungsseite zu dem wenigstens einen Rohrverbindungsstück als Umleitungsstück zur Umleitung der Durchflussrichtung des Fluids ausgebildet. Das Umleitungsstück ist beispielsweise als Eckstück ausgebildet. Insbesondere ist die Innenfläche des Eckstücks des Rohres in einer Verdrehrichtung des Rohrverbindungsstückes gegen das Rohr derart rotationssymetrisch aufgebaut, dass eine herausragende Struktur um zumindest 180° im Eckstück verdrehbar ist. Dies gilt insbesondere für herausragende Strukturen mit einer Außenfläche, die für das fluiddichtende Zusammenwirken mit der Innenfläche des Rohrs ausgelegt sind. Beispielsweise ist die Innenfläche des Rohrs im Eckbereich gerundet ausgestaltet, also insbesondere als ein Viertel einer Kreisschale oder Ellipsenschale. So kann eine Außenseite eine beispielsweise löffelförmig in den Abschnitt des Rohres hineinragende aus dem Rohrverbindungsstück herausragende Struktur mit der Form einer Innenseite des Umleitungsstücks des Rohrs korrespondieren. Derart kann insbesondere in einer Schließposition der Fluidstrom durch das Rohr unterbrochen, in einer maximalen Öffnungsposition maximal eingestellt und Zwischenpositionen graduell reduziert werden.

Weitere Ziele, vorteilhafte technischen Merkmale und Anwendungsmöglichkeiten der vorliegenden Erfindung werden als Ausführungsbeispiele anhand der Figuren und der nachfolgenden Figurenbeschreibung erläutert. Zum beanspruchten Gegenstand der Erfindung gehören alle beschriebenen und/oder bildlich dargestellten Merkmale an sich oder in beliebiger Kombination, auch unabhängig von ihrer Zusammenfassung in den Ansprüchen oder den Ausführungsbeispielen. Ausführungsformen gleicher und im Wesentlichen gleichwirkender Merkmale können dabei mit demselben Bezugszeichen gekennzeichnet werden. Der Übersichtlichkeit halber wird auf die Kenntlichmachung mit Bezugszeichen von wiederholt dargestellten Merkmalen teilweise verzichtet.

Es zeigen:
- Figur 1: eine Ausführungsform des erfindungsgemäßen Rohrverbindungsstückes und ein mit ihm verbundenes Rohr;
- Figuren 2a bis 2c: verschiedene Drehpositionen einer Ausführungsform des erfindungsgemäßen Rohrverbindungsstückes relativ zu einem mit ihm verbundenen Rohr;
- Figuren 3a bis 3d: verschiedene Verschiebepositionen einer weiteren Ausführungsform des erfindungsgemäßen Rohrverbindungsstückes relativ zu einem mit ihm verbundenen Rohr;
- Figuren 4a bis 4e: verschiedene Konfigurationen eines erfindungsgemäßen Rohrverbindungsstückes;
- Figuren 5a und 5b: eine Ausführungsform eines erfindungsgemäßen Rohrverbindungsstückes mit einem Korpus und einer herausragenden Struktur; und
- Figur 6: ein Ausführungsbeispiel eines Rohrsystems aus erfindungsgemäßen Rohrverbindungsstücken und Rohren.

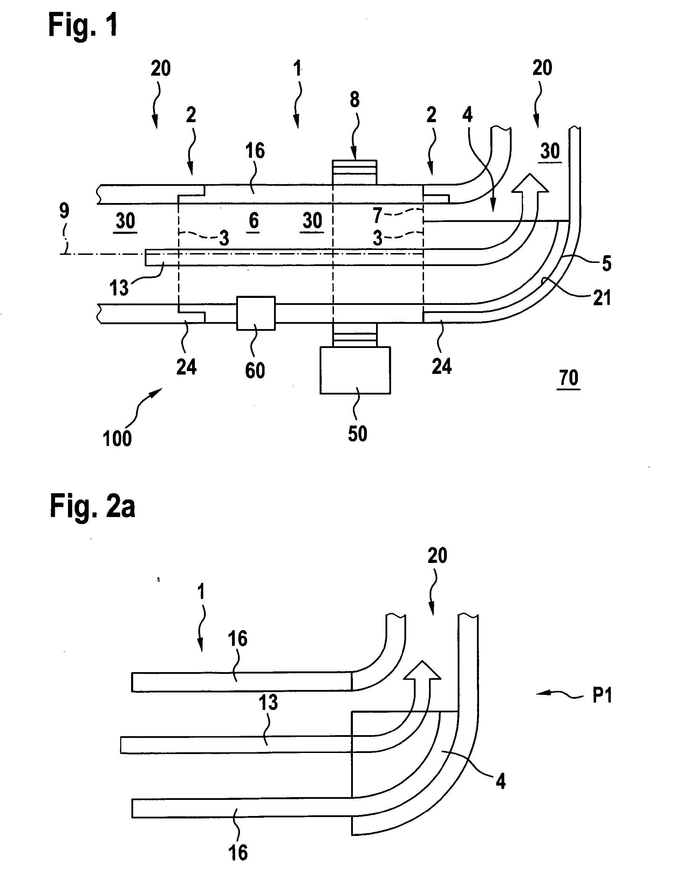

**Figur 1** zeigt schematisch eine Ausführungsform eines erfindungsgemäßen Rohrverbindungsstückes 1. Das Rohrverbindungsstück 1 weist einen Korpus 16 auf. Im Korpus 16 sind zwei Öffnungen 3 ausgebildet, durch die ein Fluidstrom 13 eines Fluides 30 in einen zwischen den Öffnungen 3 ausgebildeten Durchleitungskanal 6 ein- oder austreten kann. Im Rohrverbindungsstück 1 ist eine über eine Öffnung 3 des Korpus 16 herausstehende Struktur 4 ausgebildet, die beispielsweise einstückig mit dem Korpus 16 ausgeführt ist. Um die Öffnungen 3 des Rohrverbindungsstückes 1 sind umlaufend Adapter 2 ausgebildet, die mit Gegenadaptern 24 von angeschlossenen Rohren 20 derart zu einem Rohrsystem 100 anschließbar sind, dass kein Fluid 30 zwischen den Rohren 20 und dem Rohrverbindungsstück **1** in eine Umgebung 70 austreten kann. Die überragende Struktur 4 ist als offener Hohlkörper ausgebildet. Durch die Hohlkörperöffnung 19 kann ein Fluidstrom 13 aus dem Rohrverbindungsstück 1 austreten bzw. in das Rohrverbindungsstück 1 eintreten. Eine Außenseite 5 der überragenden Struktur 4 korrespondiert mit der Form einer Innenfläche 21 eines beispielsweise als rundes Eckstück ausgeformten Abschnittes 22 eines Rohres 20. In der dargestellten maximalen Öffnungsposition P1 (siehe dazu Figuren 2a bis 2c) ist eine offene Querschnittsfläche 7 des Rohrs 20 im Wesentlichen nicht verengt, sodass der Fluidstrom 13 im Wesentlichen (also insbesondere im Vergleich zu der Flussimpedanz von Rohren und Rohrverbindungsstücken gleicher Ausgestaltung ohne herausragende Struktur) ungehindert durch das Rohrsystem 100 fließen kann. Insbesondere ist denkbar, eine Vertiefung (nicht dargestellt) im mit dem Rohrverbindungsstück 1 verbundenen Rohrabschnitt 22 des Rohres 20 vorzusehen, in dem die überragende Struktur bevorzugt passgenau aufgenommen werden kann, sodass eine im Wesentlichen glatte und wenig Turbulenzen im Fluidstrom 13 bewirkende Oberfläche mit gegenüber anderen Abschnitten des Rohres 20 unverengter offener Querschnittsfläche 7 aufweist. Das Rohrverbindungsstück ist beispielsweise zumindest in Richtung des Fluidstroms 13 kraftschlüssig und/oder formschlüssig um eine Drehachse 9 drehbar in den Rohren 20 gelagert. Beispielsweise können die Rohre 20 in einer Rohrhalterung (nicht dargestellt) fixiert werden, die wiederum über Wandhalterungen (nicht dargestellt) an einer Wand (nicht dargestellt) fixiert sind, wobei das Rohrverbindungsstück 1 nur durch den Kraft- bzw. Formschluss mit den Rohren 20 gehalten wird. Zur Verdrehung des Rohrverbindungsstückes 1 bezüglich der Rohre 20 kann ein Kopplungsmechanismus 8 an einer vom Außenbereich 70 zugänglichen Stelle angebracht werden. Am Kopplungsmechanismus 8 kann ein Antriebsmittel 50 angreifen, um die Drehbewegung des Rohrverbindungsstückes 1 gegenüber den Rohren 20 zu treiben. Beispielsweise kann die Kopplungseinrichtung 8 ein Handgriff, eine Ratsch, ein Getriebe oder eine Aufrauhung des Rohrverbindungsstückes 1 zur händischen Betätigung sein. Alternativ kann die Kopplungseinrichtung 8 als Zahnkranzsegment ausgebildet sein, in das Zahnkränze (nicht dargestellt) des Antriebsmittels 50 eingreifen. Im Korpus 16 des Rohrverbindungsstückes 1 kann zudem ein Sensor 60 zur Messung beispielsweise einer Temperatur des Fluids 30 vorgesehen sein.

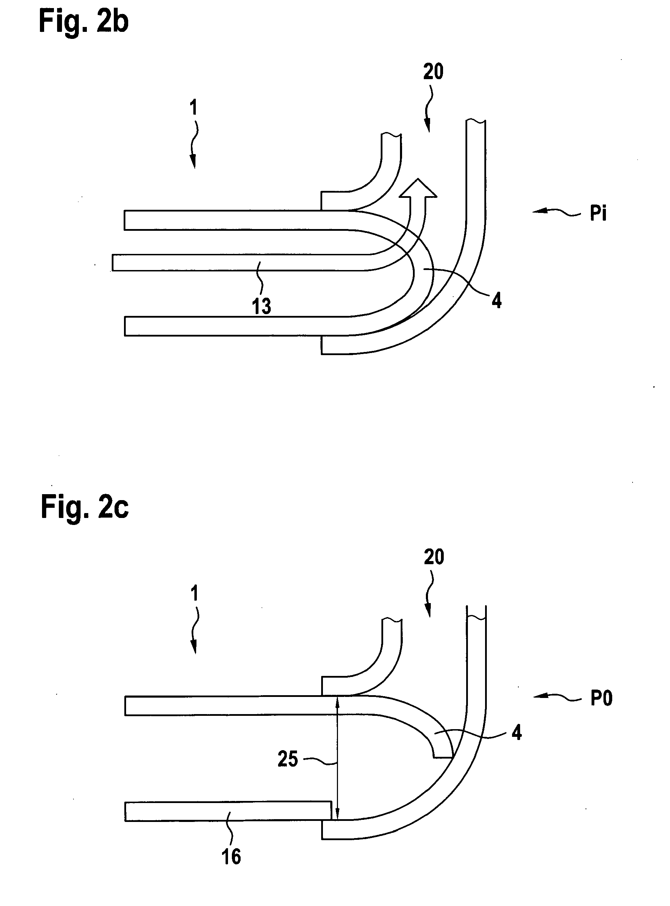

**Figuren 2a bis 2c** zeigen schematisch eine Ausführungsform eines erfindungsgemäßen Rohrverbindungsstückes 1 und ein mit ihm verbundenes Rohr 20. Durch eine Änderung der Drehposition P0, Pi, P1 des Rohrverbindungsstückes 1 relativ zum Rohr 20 kann der Fluidstrom 13 eingestellt werden. Figur 2a stellt eine maximale Öffnungsposition P1 dar, in der die Hohlkörperöffnung 19 der herausragenden Struktur 4 ganz in Richtung des Fluidstroms 13 durch das Rohr 20 ausgerichtet ist. In Figur 2c ist eine Schließposition P0 dargestellt, in der die Hohlkörperöffnung 19 der herausragenden Struktur 4 ganz entgegen der Richtung des möglichen Fluidstroms 13 ausgerichtet ist. Wenn vorteilhafterweise die herausragende Struktur 4 mit einem umlaufenden Abschnitt (nicht dargestellt) der Innenfläche 21 des Rohrs 20 dichtend zusammenwirkt, kann kein Fluid 30 zwischen dem Rohr Verbindungstück 1 und dem Rohr 20 strömen. Insbesondere kann die herausragende Struktur 4 löffelförmig oder viertelschalenförmig ausgebildet sein, vorzugsweise mit einer Höhe, die zumindest dem halben Durchmesser 25 des Rohrabschnittes 22 des Rohres 20 entspricht. Figur 2b zeigt eine beispielhafte Zwischenposition Pi, die um 90° gegenüber der maximalen Öffnungsposition P1 und auch der maximalen Schließposition P0 verdreht ist, in der die offene Querschnittsfläche 7 im Rohrabschnitt 22 des Rohrs 20 verengt ist, sodass der Fluidstrom 13 gegenüber einer maximalen Fluidstrom 13 in maximale Öffnungsposition P1 reduziert ist.

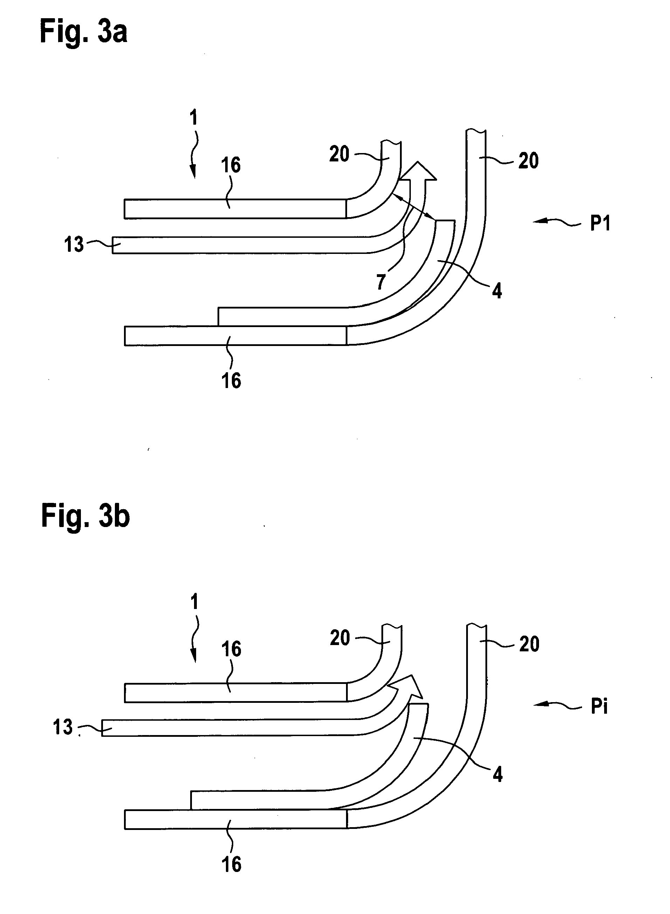

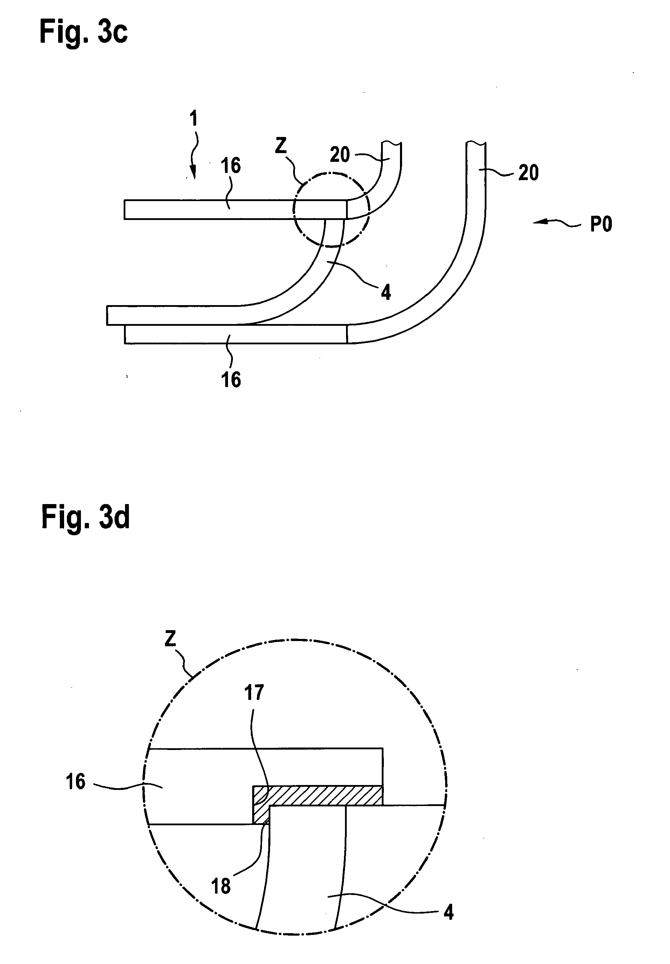

**Figuren 3a bis 3d** zeigen schematisch eine Alternative zu der in den Figuren 2a bis 2c dargestellten Ausführungsform eines erfindungsgemäßen Rohrverbindungsstückes 1 und ein mit ihm verbundenes Rohr 20. Durch eine Änderung der Verschiebeposition P0, Pi, P1 des Rohrverbindungsstückes 1 relativ zum Rohr 20 kann der Fluidstrom 13 eingestellt werden. Dazu ist die herausragende Struktur 4 in Richtung des Fluidstroms 13 verschieblich im Korpus 16 des Rohrverbindungsstückes 1 angeordnet. Alternativ ist denkbar, dass das Rohrverbindungsstück 1 selbst verschieblich mit dem Rohr 20 verbunden ist. In einer in Figur 2a dargestellten maximalen Öffnungsposition P1 liegt eine Außenseite 5 der herausragenden Struktur 4 an einer Innenfläche 21 oder in einer in der Innenfläche 21 ausgeformten Vertiefung (nicht dargestellt) des Rohrs 20 an, sodass der offene Querschnitt 7 im Rohr 20 maximal ist und so maximalen Fluidstrom 13 gestattet. In einer in Figur 3c dargestellten Schließposition P0 ist die herausragende Struktur 4 so weit in den Korpus 16 des Rohrverbindungsstückes 1 hineingeschoben, dass in einem Bereich Z die herausragende Struktur 4 mit dem Korpus 16 oder mit der Innenfläche 21 des Rohrs 20 dichtet und zusammenwirkt, sodass kein Fluidstrom 13 durch das Rohr 20 fließen kann. Nachteilig an dieser Ausführungsform ist, dass ein unter Druck stehendes Fluid 30 eine Kraft in Verschieberichtung der herausragenden Struktur 4 bewirkt. Vorteilhafterweise bietet sich das Vorsehen einer Arretiereinrichtung wie eines Getriebes, eines in Nuten eingreifenden Bolzens oder einer Klinkenratsche (nicht dargestellt) zur lösbaren Arretierung der herausragenden Struktur 4 am Korpus 16 an. Figur 3d stellt den Bereich Z aus Figur 3c in einer speziellen Ausführungsvariante dar, in der am Korpus 16 ausgebildete Dichtflächen 17 mit an der herausragenden Struktur 4 ausgebildeten Gegendichtflächen 18 dichtend zusammenwirken. Figur 3b stellt eine beispielhafte Zwischenposition Pi mit gegenüber dem maximalen Fluidstrom 13 verringerten Fluidstrom 13 dar.

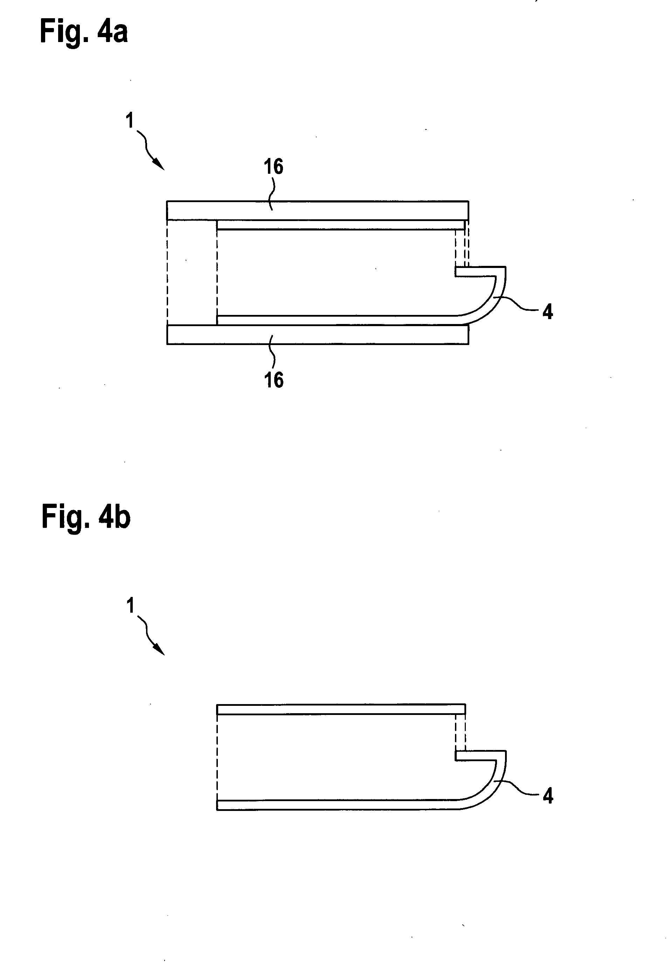

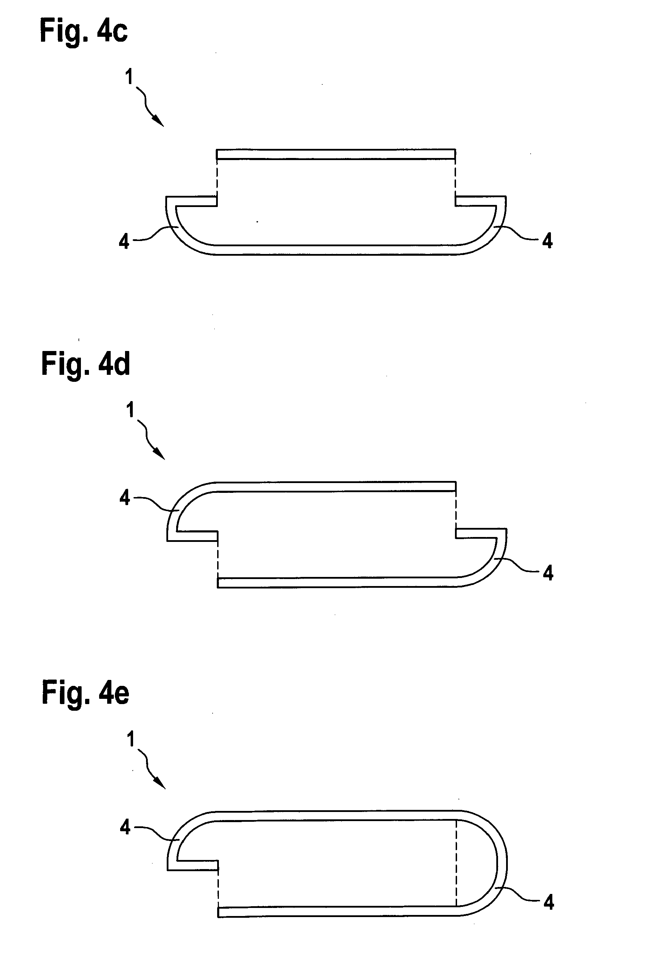

**Figuren 4a bis 4e** zeigen schematisch und beispielhaft verschiedene Konfigurationen des erfindungsgemäßen Rohrverbindungsstückes 1. Figur 4a zeigt eine zweistückige Ausführungsform des Rohrverbindungsstückes 1, bei der die herausragende Struktur 4 innerhalb des Korpus 16 beweglich gelagert ist. Figur 4b zeigt eine einstückige Ausführungsform des Rohrverbindungsstückes 1. Figur 4c zeigt eine Ausführungsform des Rohrverbindungsstückes 1 mit zwei Öffnungen 3, an denen jeweils eine herausragende Struktur 4 einstückig und/oder mehrstückig und gegebenenfalls beweglich angeordnet ausgebildet ist. In diesem Beispiel sind die Hohlraumöffnungen 19 der herausragenden Strukturen 4 in die gleiche Richtung ausgerichtet. Figur 4d zeigt ein Beispiel, in dem die Programmöffnungen 19 der beiden herausragenden Strukturen 4 in entgegengesetzte Richtung ausgerichtet sind. Figur 4e zeigt ein Beispiel, in dem die Hohlraumöffnungen 19 der herausragenden Strukturen 4 im rechten Winkel zueinander ausgerichtet sind.

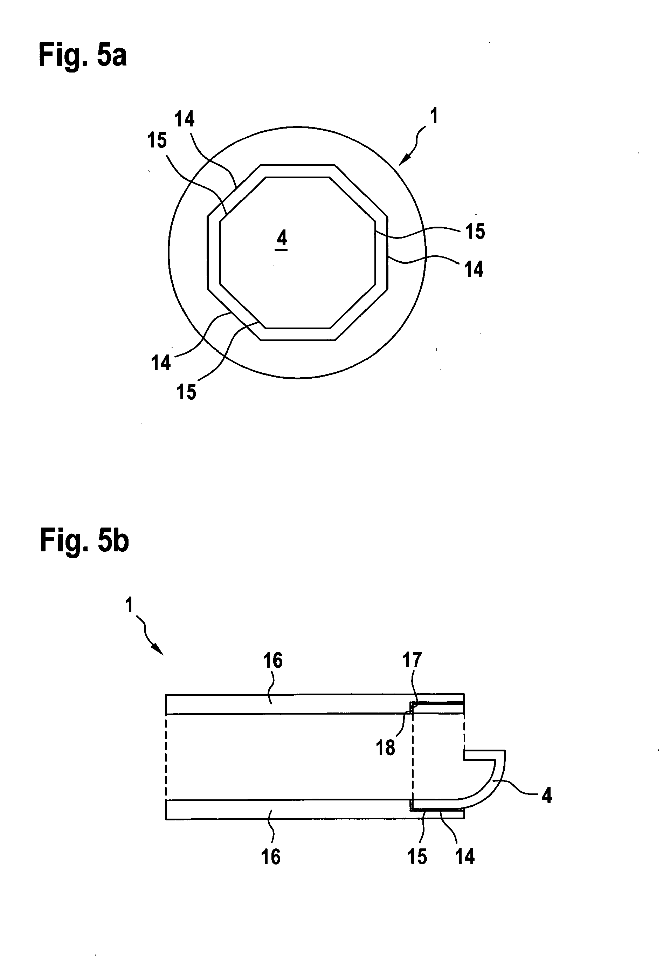

**Figur 5a und 5b** zeigen schematische Schnittansichten einer Ausführungsform eines erfindungsgemäßen Rohrverbindungsstückes 1, in dem eine herausragende Struktur 4 beispielsweise durch eine Steck- oder Klemmverbindung mit einem Korpus 16 verbunden ist. Vorzugsweise ist die Verbindung zwischen herausragender Struktur 4 und Korpus 16 für das Fluid 30 dicht. Zur genauen Definition der Winkellage von Korpus 16 zu herausragender Struktur 4 sind an der herausragenden Struktur 4 Führungsflächen 15 vorgesehen, die mit Gegenführungsflächen 14 des Korpus 16 korrespondieren. Beispielsweise kann die Anzahl der Führungsflächen 14 und entsprechend der Gegenführungsflächen 15 eine Mehrzahl von drei, vier, fünf, sechs, acht (wie im dargestellten Beispiel) oder mehr sein. Durch diese Anzahl von Führungsflächen 14 ist eine Konfiguration von der herausragenden Struktur 4 in Winkelsegmenten von 360°/Anzahl möglich. Aufgrund einer solchen modularen Ausführungsform können kostengünstig mit standardisierbaren Korpi 16 und herausragenden Strukturen 4 flexible anwendbare und einfach zu montierende Rohrverbindungsstücke 1 unterschiedlichster Konfigurationen hergestellt werden. So können Rohrverbindungsstücke 1 mit einem Korpus 16, der drei, vier oder mehr herausragende Strukturen 4 aufnehmen kann, als Mehrwegeventile konfiguriert werden. Zusätzlich können an Öffnungen 3 im Korpus 16, die nicht benötigt werden, Verschlusskappen (nicht dargestellt) fluiddicht angebracht werden.

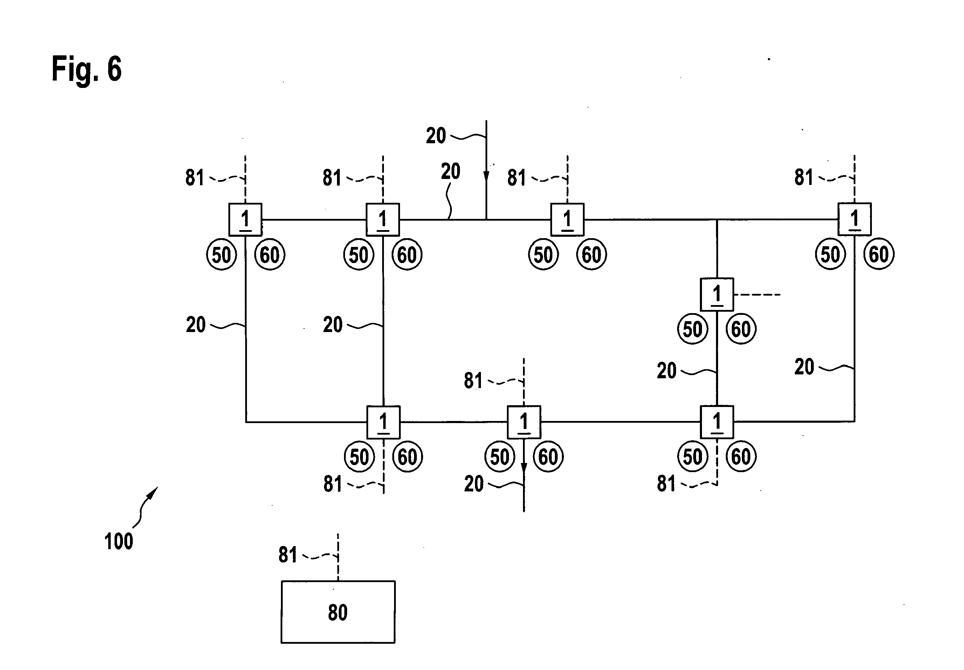

**Figur 6** zeigt schematisch ein beispielhaftes Rohrsystem 100 aus Rohrverbindungsstücken 1 und damit verbundenen Rohren 20. Die Rohre 20 sind in verschiedenen Schleifen, die beispielsweise als Heiz- oder Kühlschleifen dienen, konfiguriert. An ausgewählten Anschlussstellen (ohne Bezugszeichen) zwischen Rohren 20 können erfindungsgemäße Rohrverbindungsstückes 1 angeordnet sein. Jedes Rohrverbindungsstück 1 kann durch ein Antriebsmittel 50 angetrieben und/oder mit Sensoren 60 versehen werden. Denkbar ist auch, insbesondere aus Kostengründen, eine Untergruppe von Rohrverbindungsstücken 1 ohne Antriebsmittel 50 oder Sensoren 60 auszustatten, weil sie beispielsweise zur manuellen Voreinstellung der Fluidströme 13 im Rohrsystem 100 dienen. Über eine beispielsweise drahtlose oder auch kabelgebundene kommunikative Verbindung 81 kann eine Auswahl von Rohrverbindungsstücken 1 mit einer Regelungseinrichtung 80 zum hydraulischen Abgleich und/oder zur schleifenweisen Regelung des Fluidstroms und damit der lokalen Temperatur in kommunikativer Verbindung stehen. Dabei erfassen die Sensoren 60 zumindest eine Regelgröße, wie die lokale Temperatur des Fluides 30, senden diese an die Regelungseinrichtung 80, welche wiederum Steuersignale an das Antriebsmittel 50 der Rohrverbindungsstücke 1 aussendet, um beispielsweise die Temperatur in einem durch das Rohrsystem 100 beheizbaren oder fühlbaren Raum (ohne Bezugszeichen) gleichmäßig zu regeln.

### Bezugszeichenliste

- 1: Rohrverbindungsstück
- 2: Adapter
- 3: Öffnung
- 4: herausragende Struktur
- 5: Außenseite
- 6: Durchleitungskanal
- 7: offene Querschnittsfläche
- 8: Kopplungsmechanismus
- 9: Drehachse
- 10: Einstellmechanismus
- 11: Dichtungsvorrichtung
- 12: Verbindungsfläche
- 20: Rohr
- 21: Innenfläche
- 22: Rohrabschnitt
- 23: Verbindungsseite
- 30: Fluid
- 50: Antriebsmittel
- 60: Sensor
- 70: Außenbereich
- 100: Rohrsystem
- P0: Schließposition
- P1: maximale Öffnungsposition
- Pi: Zwischenpositionen

## Patentansprüche

1. Rohrverbindungsstück (1) für von einem Fluid (30) durchflossene Rohre (20)
∘ mit wenigstens zwei Adaptern (2) zum Anschluss jeweils eines Rohres (20),
∘ mit einem Durchleitungskanal (6) mit mindestens zwei Öffnungen (3) zur Durchleitung des Fluides (30),
**gekennzeichnet durch**
∘ wenigstens eine aus einer Öffnung (3) herausragende Struktur (4) zur Begrenzung des Durchflusses des Fluides (30) und
∘ wenigstens einen Einstellmechanismus (10) für eine Position (P0, Pi, P1) der wenigstens einen herausragenden Struktur (4) derart, dass eine offene Querschnittsfläche (7) in einem mit dem Rohrverbindungsstück (1) verbundenen Rohr (20) begrenzt werden kann, sodass der Durchfluss **durch** das Rohrverbindungsstück (1) einstellbar ist.

2. Rohrverbindungsstück (1) nach Anspruch 1,
**dadurch gekennzeichnet, dass**
die herausragende Struktur (4) löffelförmig ist, und bevorzugt, dass eine Außenfläche (5) der herausragenden Strukturen (1) bündig mit einer Innenfläche (21) des mit dem Rohrverbindungsstück (1) verbundenen Rohres (20) arnordenbar ist.

3. Rohrverbindungsstück (1) nach einem der vorangegangenen Ansprüche,
**dadurch, gekennzeichnet, dass**
die herausragende Struktur (4) starr mit dem Rohrverbindungsstück (1) verbunden ist oder um eine Drehachse (9) drehbar im Rohrverbindungsstück (1) gelagert ist.

4. Rohrverbindungsstück (1) nach einem der vorangegangenen Ansprüche,
**dadurch gekennzeichnet, dass**
die herausragende Struktur (4) und der Einstellmechanismus (10) derart eingerichtet sind, dass in einer maximalen Öffnungsposition (P1) der Durchfluss durch das Rohrverbindungsstück (1) im Wesentlichen unbegrenzt ist, und das in einer Schließposition (P0) der Durchfluss durch das Rohrverbindungsstück (1) im Wesentlichen unterbrochen ist, und bevorzugt, dass in eine Anzahl von Zwischenpositionen (Pi) der Durchfluss durch das Rohrverbindungsstück (1) sukzessive verringert wird.

5. Rohrverbindungsstück (1) nach einem der vorangegangenen Ansprüche,
**dadurch gekennzeichnet, dass**
das Rohrverbindungsstück (1) einen von einem Außenraum (70) bedienbaren Kopplungsmechanismus (8) aufweist, über den der Einstellmechanismus (10) betätigbar ist.

6. Rohrverbindungsstück (1) nach einem der vorangegangenen Ansprüche,
**dadurch gekennzeichnet, dass**
der Einstellmechanismus (10) als Mechanismus zum Drehen der herausragenden Struktur (4) ausgebildet ist.

7. Rohrverbindungsstück (1) nach Anspruch 6,
**dadurch gekennzeichnet, dass**
das mit den wenigstens zwei Rohren (20) verbundene Rohrverbindungsstück (1) drehbar in den Rohren (20) lagerbar ist.

8. Rohrverbindungsstück (1) nach einem der vorangegangenen Ansprüche,
**dadurch gekennzeichnet, dass**
die wenigstens zwei Adapter (2) eine Dichtungsvorrichtung (11) zur Verhinderung des Austritts von Fluid aus einer Verbindungsfläche (12) zwischen dem Rohrverbindungsstück (1) und einem Rohr (20) in einen Außenbereich (70) aufweist.

9. Rohrverbindungsstück (1) nach einem der vorangegangenen Ansprüche,
**dadurch gekennzeichnet, dass**
das Rohrverbindungsstück (1) wenigstens einen Sensor (60) zur Messung der Temperatur, des Durchflusses und/oder des Drucks des Fluides (30) aufweist, wobei der wenigstens eine Sensor (60) bevorzugt in Regelverbindung mit einem Antriebsmittel (50) für die wenigstens eine herausragende Struktur (4) steht, wobei noch bevorzugter der Sensor (60) in kommunikativer Verbindung zu einer Steueranlage für den hydraulischen Abgleich in einem Rohrsystem (100) steht, so dass der Durchfluss und/oder Druck des Fluides (30) automatisiert ist.

10. Rohrsystem (1) zur Durchflussregelung eines Fluides (30)
∘ mit wenigstens einem Rohrverbindungsstück (1) nach einem der vorangegangenen Ansprüche und
∘ mit einer Mehrzahl von mit dem wenigstens einen Rohrverbindungsstück (1) verbundenen Rohren (20),
∘ wobei ein Rohrabschnitt (22) wenigstens einem Rohr (20) an einer Verbindungsseite (23) zu dem wenigstens einen Rohrverbindungsstück (1) als Umleitungsstück zur Umleitung der Durchflussrichtung des Fluides (30) ausgebildet ist.
